# EUROPÄISCHE PATENTSCHRIFT

(11) **EP 1 589 068 B1**
(45) Veröffentlichungstag und Bekanntmachung des Hinweises auf die Patenterteilung: **12.06.2019**
(21) Anmeldenummer: 04009270.2
(22) Anmeldetag: 20.04.2004
(51) Int. Cl.: C08L 7/00, C08K 5/01, B60C 1/00

(54) **Kautschukmischung enthaltender Reifen**
Tires comprising a rubber composition
Pneumatiques comprenant une composition de caoutchouc

(43) Veröffentlichungstag der Anmeldung: 26.10.2005
(73) Patentinhaber: Continental Reifen Deutschland GmbH, 30165 Hannover (DE)
(72) Erfinder: Weinreich, Hajo, Dr., 31840 Hessisch Oldendorf (DE); Söhnen, Dietmar, Dr., 31867 Lauenau (DE)
(74) Vertreter: Finger, Karsten

(56) Entgegenhaltungen:
- WO-A-94/01295
- US-A1- 2002 058 760
- US-A1- 2003 145 930

## Beschreibung

Die Erfindung betrifft einen Fahrzeugluftreifen mit einem Laufstreifen mit Cap- und Base-Aufbau, wobei die Laufstreifenbase auf einer Kautschukmischung ohne aromatische Prozessöle basiert.

Der Laufstreifen eines Fahrzeugluftreifens kann aus einer einzigen Mischung gefertigt werden. Heutzutage ist es allerdings üblich, den Laufstreifen von Fahrzeugluftreifen aus zumindest zwei Mischungen, einer so genannten Cap- und einer Basemischung, zu fertigen. Die Cap steht im fertigen Reifen mit der Fahrbahn in Berührung, während die Base (auch Unterplatte genannt) als dünne Platte unterhalb der Cap zwischen Cap und Gürtel angeordnet ist. Die Mischung für die Cap soll bei Fahrzeugluftreifen, die im herkömmlichen Straßenbetrieb eingesetzt werden, in erster Linie eine gute Haftung (Traktion) auf allen Fahrbahnoberflächen bei geringem Abrieb bewirken, während die Mischung für die Base vor allem zum Fahrkomfort, zu gutem Handling, zu hoher Haltbarkeit und zu niedrigem Rollwiderstand beitragen soll. Damit der Reifen auch gute Wintereigenschaften zeigt, sollte die Base eine hohe Kälteflexibilität aufweisen.

Damit eine Kautschukmischung für die Laufstreifenbase den vorgenannten Anforderungen gerecht wird, sollte sie im vulkanisierten Zustand eine hohe Flexibilität für guten Fahrkomfort, eine angemessene Steifigkeit, die sich beispielsweise im dynamischen Modul E' bei hoher Dehnung und bei hoher Temperatur widerspiegelt, für gutes Handling und einen niedrigen Verlustfaktor tan δ bei 60 °C für einen niedrigen Rollwiderstand aufweisen. Diese Eigenschaften stehen normalerweise im Konflikt miteinander, d. h. wenn die eine Eigenschaft, z. B. die Steifigkeit, durch Veränderung der Mischungszusammensetzung verbessert wird, verschlechtert sich in der Regel eine andere Eigenschaft, z. B. die Flexibilität.

Aus der EP-B- 1 179 560 sind Kautschukmischungen für den gesamten Laufstreifen oder die Laufstreifencap ohne aromatische Prozessöle bekannt. Die Mischungen enthalten zur Vermeidung von schwarzen Markierungen durch Abrieb und dunklen Verfärbungen von Oberflächen durch längeren Kontakt 5 bis 60 phr eines speziellen Mineralölweichmachers, 1 bis 20 phr eines Glycerids und/oder eines Faktis und Kieselsäure und Ruß im Gewichtsverhältnis von 1 : 2 bis 20 : 1. Mischungen für eine Cap sind in der Regel nicht für eine Base einsetzbar, da sie nicht die gewünschten Eigenschaften mit sich bringen.

In der WO 94/01295 werden Kautschukmischungen ohne aromatische Prozessöle mit Rußen des Typs N 660 für Reifenseitenwände beschrieben.

Die US 2002/0058760 A1 und die US 2003/0145930 A1 offenbaren Kautschukmischungen für Reifenbauteile die Naturkautschuk, Polybutadien und Ruß enthalten.

Der vorliegenden Erfindung liegt nun die Aufgabe zugrunde, Kautschukmischungen des Anspruchs 1, für die Laufstreifenbase von Fahrzeugluftreifen mit Cap- und Baseaufbau, bereitzustellen, deren Vulkanisate sich durch eine höhere Flexibilität bei gleichzeitig hoher Steifigkeit auszeichnen. Bei Reifen mit einer solchen Base ergibt sich so ein hoher Fahrkomfort und ein besseres Handling.

Gelöst wird diese Aufgabe erfindungsgemäß dadurch, dass die Kautschukmischung für die Laufstreifenbase frei von aromatischen Prozessölen ist und
- 50 - 95 phr cis-1,4-Polyisopren,
- 5 - 50 phr Polybutadien mit einem cis-1,4-Anteil > 90 mol%,
- bis maximal 5 phr eines weiteren Dienkautschukes,
- 3 - 30 phr zumindest eines Mineralölweichmachers, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers aufweist, und
- 30 - 100 phr zumindest eines Rußes mit einer Iodadsorptionszahl von 100 - 180 g/kg und einer DBP-Zahl von 100 - 150 cm³/100 g enthält.

Die in dieser Schrift verwendete Angabe phr (parts per hundred parts of rubber by weight) ist dabei die in der Kautschukindustrie übliche Mengenangabe für Mischungsrezepturen.

Die Dosierung der Gewichtsteile der einzelnen Substanzen wird dabei stets auf 100 Gewichtsteile der gesamten Masse aller in der Mischung vorhandenen Kautschuke bezogen.

Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (Cp) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

Die polycyclischen aromatischen Verbindungen umfassen aromatische Kohlenwasserstoffe, die mehr als drei kondensierte aromatische Ringe enthalten, und die davon abgeleiteten heterocyclischen Verbindungen mit Schwefel- und/oder Stickstoff. Die Ringe können mit kurzen Alkyl- oder Cycloalkylgruppen substituiert sein.

Überraschenderweise wurde gefunden, dass durch die spezielle Kombination von 3 - 30 phr zumindest eines Mineralölweichmachers, aufweisend einen geringen Gehalt an polycyclischen Verbindungen, mit zumindest 30 bis 100 phr zumindest eines Rußes mit hoher Struktur (hohe DBP-Zahl) und großer Oberfläche (hohe Jodadsorptionszahl) in Mischungen, die um Wesentlichen auf einem Verschnitt aus cis-1,4-Polyisopren und Polybutadien basieren, die Steifigkeit und die Flexibilität entkoppelt werden können und die Verbesserung der einen Eigenschaft nicht die Verschlechterung der anderen nach sich zieht. So kann die Flexibilität beispielsweise erhöht werden, ohne dass damit eine Verschlechterung der Steifigkeit einher geht. Wird die Mischung für eine Laufstreifenbase verwendet, erhält man auf diese Weise Reifen, die sich durch ein gutes Handling bei gleichzeitig verbessertem Komfort auszeichnen. Der Effekt der Kombination könnte darin begründet liegen, dass durch die Verwendung des speziellen Mineralölweichmachers die Verträglichkeit der beiden tieftemperaturflexiblen Polymere cis-1,4-Polyisopren und Polybutadien verbessert wird und sich dadurch die innere Steifigkeit erhöht. Durch die gleichzeitige Verwendung des besonderen Rußes, der mit seiner hohen Struktur und seiner hohen Oberfläche auch als Aktivruß bezeichnet wird, bleibt überraschenderweise die Steifigkeit erhalten, obwohl die Flexibilität ansteigt.

Die Mischungen weisen außerdem den Vorteil auf, dass die Vulkanisate einen verringerten Verlustfaktor tan δ bei 60 °C zeigen. Dies bewirkt bei Reifen mit einer Base aus einer solchen Mischung einen verringerten Rollwiderstand. Auch die Kälteflexibiliät gemessen anhand des dynamischen Moduls E' bei - 15 °C, ist bei den erfindungsgemäßen Mischungen verbessert, was bei Reifen mit einer Base aus einer solchen Mischung zu besseren Wintereigenschaften führt.

Die Kautschukmischung enthält 50 - 95 phr cis-1,4-Polyisopren. Bevorzugt ist die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%. Naturkautschuk und synthetisches Polyisopren (IR) können im Verschnitt miteinander eingesetzt werden. Besonders bevorzugt ist die Verwendung von Naturkautschuk, da die Vulkanisate aus solchen Mischungen sich durch ein gute Rissbeständigkeit auszeichnen.

Ferner enthält die Kautschukmischung 5 - 50 phr Polybutadien (BR) mit einem cis-1,4-Anteil größer 90 Gew.-%, welches z. B. durch Lösungspolymerisation in Anwesenheit von Katalysatoren vom Typ der seltenen Erden hergestellt werden kann.

Gemäß einer vorteilhaften Weiterbildung der Erfindung enthält die Kautschukmischung 65 - 75 phr cis-1,4-Polyisopren und 25 - 35 phr Polybutadien. Diese Mischungen zeigen hinsichtlich der Steifigkeit und der Flexibilität die besten Ergebnisse.

Die schwefelvernetzbare Kautschukmischung kann außerdem bis zu 5 phr eines weiteren Dienkautschukes wie z. B. ein lösungspolymerisiertes Styrol-Butadien-Copolymer (L-SBR) oder ein emulsionspolymerisiertes Styrol-Butadien-Copolymer (E-SBR) enthalten.

Bevorzugt werden in der Mischung 10 - 20 phr des Mineralölweichmachers oder Kombinationen aus mehreren Mineralölweichmachern eingesetzt. Diese Menge an Weichmacher gewährleistet eine optimale Verarbeitbarkeit bei guten dynamischen Eigenschaften und guter Kälteflexibilität. Als Mineralölweichmacher, deren Gehalte an polycyclischen aromatischen Verbindungen (PCA-Gehalt) bestimmt mit dem DMSO-Extrakt nach der IP 346 Methode weniger als 3 Gew.-% bezogen auf das Gesamtgewicht des Mineralölweichmachers betragen, können grundsätzlich alle dem Fachmann bekannten Mineralölweichmacher benutzt werden, die diese Werte erfüllen. Derartige Mineralölweichmacher sind z. B. MES (**m**ild **e**xtraction **s**olvate), das durch Solvent-Extraktion von Schweröldestillaten oder durch Behandlung von Schweröldestillaten mit Wasserstoff in Anwesenheit eines Katalysators (Hydrierung) erhalten wird, oder TDAE (**t**reated **d**estillate **a**romatic **e**xtract). Hinsichtlich dieser Mineralölweichmacher sei in diesem Zusammenhang exemplarisch auf V. Null, "Safe Process Oils for Tires with Low Environmental Impact", Kautschuk Gummi Kunststoffe, 12/1999, S. 799-805 verwiesen. Die Verwendung derartiger Mineralölweichmacher in Kautschukmischungen ist z. B. auch aus der EP 0 940 462 A2 bekannt.
Wird ein Mineralölweichmacher mit einer Glasübergangstemperatur von weniger als-45 °C verwendet, kann man die Kälteflexibilität bei tieferen Temperaturen weiter verbessern.

Die Kautschukmischung enthält vorzugsweise 55 - 75 phr des oder der Aktivruße(s), um eine besonders gute Steifigkeit bei den Vulkanisaten aus der Mischung zu erzielen.

Der Aktivruß weist eine Iodadsorptionszahl (gemäß ASTM D 1510) von 100 - 180 g/kg, vorzugsweise von 110 - 130 g/kg, und einer DBP-Zahl (gemäß ASTM D 2414) von 100 - 150 cm³/100 g, vorzugsweise von 120 - 140 cm³/100 g auf. Es können beispielsweise Ruße der Typen N-110 und N-121 verwendet werden.

Als Füllstoffe kann die Kautschukmischung neben dem Aktivruß auch noch andere Ruße, Kieselsäure, Aluminiumhydroxid, Schichtsilikate, Kreide, Stärke, Magnesiumoxid, Titandioxid, Kautschukgele usw. in beliebigen Kombinationen enthalten.

Um die Steifigkeit der Vulkanisate aus der Mischung zu erhöhen, ist es vorteilhaft der Mischung 0,5 - 20 phr, vorzugsweise 1 - 5 phr, Kurzfasern beizumengen. Bei mehr als 20 phr Kurzfasern ergeben sich Verarbeitungsprobleme. Kurzfasern, auch Stapelfasern oder Spinnfasern genannt, sind Schnittfasern z. B. auf Basis von Polyamid, Glas, Aramid, Cellulose oder sonstigen textilen Materialien, die in der Gummiindustrie eingesetzt werden, mit einer mittleren Länge von weniger als 10 mm und einem Durchmesser von 1 bis 30 µm. Die Kurzfasern können zur Verbesserung der Haftung zur Elastomermatrix mit einem Haftsystem versehen sein. Bevorzugt werden Aramidkurzfasern eingesetzt, die sich durch eine hohe Festigkeit bei gleichzeitig hoher Biegeflexibilität auszeichnen.

Neben den bereits genannten Inhaltsstoffen kann die Kautschukmischung weitere in der Kautschukindustrie übliche Zusatzstoffe wie z. B. weitere Weichmacher, Alterungsschutzmittel, Aktivatoren, wie z. B. Zinkoxid und Fettsäuren (z. B. Stearinsäure), Wachse, Harze und Mastikationshilfsmittel in üblichen Gewichtsteilen enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z.B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Die Mischung wird in die Form einer Laufstreifenbase gebracht, die in der Regel gemeinsam mit der Mischung für die Laufstreifencap zu einem Laufstreifenrohling bestehend aus Cap und Base extrudiert wird. Ein so erzeugter Laufstreifenmischungsrohling wird bei der Herstellung des Fahrzeugluftreifenrohlings wie bekannt aufgelegt.
Die Laufstreifenbase kann aber auch auf einen Reifenrohling, der bereits alle Reifenteile bis auf den Laufstreifen enthält, in Form eines schmalen Kautschukmischungsstreifens aufgewickelt werden. Darüber wird ein Mischungssteifen für die Cap aufgespult.
Nach der Vulkanisation des Fahrzeugluftreifens mit einem Laufstreifen mit Cap- und Baseaufbau weist der Reifen ein gutes Handling bei gleichzeitig gutem Komfort auf.

Die Erfindung soll nun anhand von Vergleichs- und Ausführungsbeispielen, die in den Tabellen 1 und 2 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die Mischungen für die erfinindungsgemäßen zeifen sind mit E gekennzeichnet.

Die Mischungsherstellung erfolgte unter üblichen Bedingungen in zwei Stufen in einem Labortangentialmischer. Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften bestimmt, die in der Tabelle 2 aufgelistet sind. Für die Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- dynamischer Speichermodul E' bei 55 °C gemäß DIN 53 513 aus Messung mit 20 % statischer Vorspannung und einer Dehnungsamplitude von 12 % bei einer Frequenz von 10 Hz
- dynamischer Speichermodul E' bei -15 °C gemäß DIN 53 513 aus Messung mit konstanter Spannungsamplitude von 50 ± 30 N bei einer Frequenz von 10 Hz
- dynamischer Speichermodul E' bei 80 °C gemäß DIN 53 513 aus Messung mit konstanter Spannungsamplitude von 50 ± 30 N bei einer Frequenz von 10 Hz
- Verlustfaktor tan δ bei 60 °C gemäß DIN 53 513 aus Messung mit konstanter Spannungsamplitude von 50 ± 30 N bei einer Frequenz von 10 Hz

**Tabelle 1**

| **Bestandteile** | **Einheit** | **1(V)** | **2(V)** | **3(E)** | **4(E)** |
|---|---|---|---|---|---|
| Naturkautschuk | phr | 70 | 70 | 70 | 67 |
| BR^{a} | phr | 30 | 30 | 30 | 30 |
| Aramidkurzfasern vermischt mit Naturkautschuk^{b} | phr | - | - | - | 5 |
| Ruß N-339 | phr | 70 | - | - | - |
| Ruß N-121 | phr | - | 63 | 63 | 63 |
| aromatisches Prozessöl | phr | 13,5 | 13,5 | - | - |
| TDAE^{c} | phr | - | - | 13,5 | 13,5 |
| Klebharz | phr | 4 | 4 | 4 | 4 |
| Verarbeitungshilfsmittel | phr | 2 | 2 | 2 | 2 |
| 6PPD | phr | 1 | 1 | 1 | 1 |
| Zinkoxid | phr | 3 | 3 | 3 | 3 |
| Stearinsäure | phr | 3 | 3 | 3 | 3 |
| Beschleuniger | phr | 3 | 3 | 3 | 3 |
| Schwefel | phr | 2 | 2 | 2 | 2 |

| | | | | | |
|---|---|---|---|---|---|
| ^{a} High-cis Polybutadien ^{b} Rhenogran P91/40 NR, 40 Gew.-% Aramidkurzfasern, 60 Gew.-% NR, Rheinchemie, Deutschland ^{c} **t**reated **d**estillate **a**romatic **e**xtract | | | | | |

**Tabelle 2**

| **Eigenschaften** | **Einheit** | **1(V)** | **2(V)** | **3(E)** | **4(E)** |
|---|---|---|---|---|---|
| Härte bei RT | Shore A | 71,6 | 71,7 | 71,2 | 77,9 |
| Härte bei 70 °C | Shore A | 67,1 | 67,5 | 66,9 | 74,3 |
| Rückprallelast. bei RT | % | 36,7 | 38,0 | 39,6 | 35,6 |
| Rückprallelast. bei 70 °C | % | 51,6 | 50,6 | 52,3 | 48,9 |
| E' bei 55 °C / 12 % Dehnung | MPa | 6,5 | 6,4 | 6,5 | 10,0 |
| E' bei - 15 °C | MPa | 32,4 | 32,5 | 29,5 | 54,7 |
| E' bei 80 °C | MPa | 7,78 | 7,84 | 7,86 | 12,7 |
| tan δ bei 60 °C | - | 0,2517 | 0,2497 | 0,2245 | 0,2514 |

Die Rückprallelastizität bei Raumtemperatur dient als Maß für die Flexibilität der Vulkanisate. Eine höhere Rückprallelastizität ist mit einer höheren Flexibilität gleichzusetzen. Der dynamische Modul E' bei 12 % Dehnung und der dynamische Modul E' bei 80 °C korrelieren mit der Steifigkeit der Vulkanisate bei Belastung, wobei größere E'-Werte eine höhere Steifigkeit bedeuten. Ein hoher dynamischer Modul E' bei diesen Bedingungen wird als Indiz für ein gutes Handlingpotential der Mischung bei Verwendung im Reifen angesehen. Je kleiner der dynamische Modul E' bei -15 °C, desto höher ist die Kälteflexibilität der Vulkanisate. Je kleiner der tan δ bei 60 °C, desto geringer ist bei Verwendung der Mischung als Laufstreifenbase der Rollwiderstand des Reifens.

Aus der Tabelle 2 wird ersichtlich, dass erst durch Kombination von TDAE mit dem Ruß N-121 in Mischungen auf der Basis von Naturkautschuk und Polybutadien Mischungen geschaffen werden, deren Vulkanisate sich durch eine verbesserte Flexibilität bei gleichzeitig guter Steifigkeit auszeichnen. Außerdem zeigt die Mischung 3(E) eine bessere Kälteflexibilität der Vulkanisate und der tan δ bei 60 °C ist erniedrigt. Verwendet man die Mischung 3(E) für die Base in einem Laufstreifen eines Fahrzeugluftreifens, so ergibt sich ein Reifen, der im Vergleich zu einem mit einer Base aus Mischung 1(V) oder 2(V) ein besseres Handling (höher Steifigkeit), einen höheren Fahrkomfort (höhere Flexiblität) und einen niedrigen Rollwiderstand (geringer tan δ bei 60 °C) aufweist. Die Reifen zeigen außerdem verbesserte Wintereigenschaften durch die verbesserte Kälteflexibilität.

Die Mischung 4(E) belegt, dass die Steifigkeit der Vulkanisate durch Zudosierung von Kurzfasern deutlich erhöht werden kann, ohne dass sich der tan δ bei 60 °C verändert, d. h. der Rollwiderstand bleibt bei einem Reifen unverändert.

## Patentansprüche

1. Fahrzeugluftreifen mit einem Laufstreifen mit Cap- und Base-Aufbau, wobei die Laufstreifenbase auf einer mit Schwefel vulkanisierten Kautschukmischung ohne aromatische Prozessöle basiert, die
- 50 - 95 phr (Gewichtsteile bezogen auf 100 Gewichtsteile der Gesamtkautschukmasse) cis-1,4-Polyisopren,
- 5 - 50 phr Polybutadien mit einem cis-1,4-Anteil > 90 mol%,
- bis maximal 5 phr eines weiteren Dienkautschukes,
- 3 - 30 phr zumindest eines Mineralölweichmachers, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers aufweist, und
- 30 - 100 phr zumindest eines Rußes mit einer Iodadsorptionszahl von 100 -180 g/kg und einer DBP-Zahl von 100 - 150 cm³/100 g enthält.

2. Fahrzeugluftreifen nach Anspruch 1, **dadurch gekennzeichnet, dass** das cis-1,4-Polyisopren Naturkautschuk ist.

3. Fahrzeugluftreifen nach Anspruch 1 oder 2, **dadurch gekennzeichnet, dass** die Kautschukmischung für die Laufstreifenbase 65 - 75 phr cis-1,4-Polyisopren und 25 bis 35 phr Polybutadien enthält.

4. Fahrzeugluftreifen nach zumindest einem der vorhergehenden Ansprüche, **dadurch gekennzeichnet, dass** die Kautschukmischung für die Laufstreifenbase 10 - 20 phr des Mineralölweichmachers enthält.

5. Fahrzeugluftreifen nach zumindest einem der vorhergehenden Ansprüche, **dadurch gekennzeichnet, dass** die Kautschukmischung für die Laufstreifenbase 55 - 75 phr des Rußes enthält.

6. Fahrzeugluftreifen nach zumindest einem der vorhergehenden Ansprüche, **dadurch gekennzeichnet, dass** der Ruß eine Iodadsorptionszahl von 110 - 130 g/kg und einer DBP-Zahl von 120 - 140 cm³/100 g aufweist.

7. Fahrzeugluftreifen nach zumindest einem der vorhergehenden Ansprüche, **dadurch gekennzeichnet, dass** die Kautschukmischung für die Laufstreifenbase 0,5 - 20 phr Kurzfasern enthält.

8. Fahrzeugluftreifen nach Anspruch 7, **dadurch gekennzeichnet, dass** die Kautschukmischung für die Laufstreifenbase 1 bis 5 phr Kurzfasern enthält.

9. Fahrzeugluftreifen nach Anspruch 7 oder 8, **dadurch gekennzeichnet, dass** die Kautschukmischung für die Laufstreifenbase Aramidkurzfasern enthält.

## Claims

1. Pneumatic vehicle tyre having a thread having a cap and base construction, wherein the tread base is based on a sulfur-vulcanized rubber mixture free from aromatic process oils which contains
- 50-95 phr (parts by weight based on 100 parts by weight of the total rubber composition) of cis-1,4-polyisoprene,
- 5-50 phr of polybutadiene having a cis-1,4 proportion > 90 mol%,
- up to a maximum of 5 phr of a further diene rubber,
- 3-30 phr of at least one mineral oil plasticizer having a content of polycyclic aromatic compounds determined with the DMSO extract according to the IP 346 method of less than 3% by weight based on the total weight of the mineral oil plasticizer and
- 30-100 phr of at least one carbon black having an iodine adsorption number of 100-180 g/kg and a DBP number of 100-150 cm³/100g.

2. Pneumatic vehicle tyre according to Claim 1, **characterized in that** the cis-1,4-polyisoprene is natural rubber.

3. Pneumatic vehicle tyre according to Claim 1 or 2, **characterized in that** the rubber mixture for the tread base contains 65-75 phr of cis-1,4-polyisoprene and 25 to 35 phr of polybutadiene.

4. Pneumatic vehicle tyre according to at least one of the preceding claims, **characterized in that** the rubber mixture for the tread base contains 10-20 phr of the mineral oil plasticizer.

5. Pneumatic vehicle tyre according to at least one of the preceding claims, **characterized in that** the rubber mixture for the tread base contains 55-75 phr of the carbon black.

6. Pneumatic vehicle tyre according to at least one of the preceding claims, **characterized in that** the carbon black has an iodine adsorption number of 110-130 g/kg and a DBP number of 120-140 cm³/100g.

7. Pneumatic vehicle tyre according to at least one of the preceding claims, **characterized in that** the rubber mixture for the tread base contains 0.5-20 phr of short fibers.

8. Pneumatic vehicle tyre according to Claim 7, **characterized in that** the rubber mixture for the tread base contains 1 to 5 phr of short fibres.

9. Pneumatic vehicle tyre according to Claim 7 or 8, **characterized in that** the rubber mixture for the tread base contains aramid short fibres.

## Revendications

1. Pneumatique de véhicule pourvu d'une bande de roulement présentant une structure de chape et de fond, le fond de la bande de roulement étant à base d'un mélange de caoutchouc vulcanisé par du soufre sans huiles plastifiantes aromatiques, qui contient
- 50-95 pcc (parties en poids par rapport à 100 parties en poids de la masse totale de caoutchouc) de cis-1,4-polyisoprène,
- 5-50 pcc de polybutadiène présentant une proportion de cis-1,4 > 90% en mole,
- jusqu'à maximum 5 pcc d'un autre caoutchouc diénique,
- 3-30 pcc d'au moins un plastifiant à base d'huile minérale, qui présente une teneur en composés aromatiques polycycliques, déterminée à l'aide de l'extrait au DMSO selon la méthode IP 346, inférieure à 3% en poids par rapport au poids total du plastifiant à base d'huile minérale et
- 30-100 pcc d'au moins une suie présentant un indice d'adsorption d'iode de 100-180 g/kg et un indice DBP de 100-150 cm³/100 g.

2. Pneumatique pour véhicule selon la revendication 1, **caractérisé en ce que** le cis-1,4-polyisoprène est du caoutchouc naturel.

3. Pneumatique pour véhicule selon la revendication 1 ou 2, **caractérisé en ce que** le mélange de caoutchouc pour le fond de la bande de roulement contient 65-75 pcc de cis-1,4-polyisoprène et 25 à 35 pcc de polybutadiène.

4. Pneumatique pour véhicule selon au moins l'une quelconque des revendications précédentes, **caractérisé en ce que** le mélange de caoutchouc pour le fond de la bande de roulement contient 10-20 pcc du plastifiant à base d'huile minérale.

5. Pneumatique pour véhicule selon au moins l'une quelconque des revendications précédentes, **caractérisé en ce que** le mélange de caoutchouc pour le fond de la bande de roulement contient 55-75 pcc de la suie.

6. Pneumatique pour véhicule selon au moins l'une quelconque des revendications précédentes, **caractérisé en ce que** la suie présente un indice d'adsorption d'iode de 110-130 g/kg et un indice DBP de 120-140 cm³/100 g.

7. Pneumatique pour véhicule selon au moins l'une quelconque des revendications précédentes, **caractérisé en ce que** le mélange de caoutchouc pour le fond de la bande de roulement contient 0,5-20 pcc de fibres courtes.

8. Pneumatique pour véhicule selon la revendication 7, **caractérisé en ce que** le mélange de caoutchouc pour le fond de la bande de roulement contient 1 à 5 pcc de fibres courtes.

9. Pneumatique pour véhicule selon la revendication 7 ou 8, **caractérisé en ce que** le mélange de caoutchouc pour le fond de la bande de roulement contient des fibres courtes d'aramide.
